# EUROPÄISCHE PATENTSCHRIFT

(11) **EP 2 750 909 B1**
(45) Veröffentlichungstag und Bekanntmachung des Hinweises auf die Patenterteilung: **09.12.2015**
(21) Anmeldenummer: 12743105.4
(22) Anmeldetag: 17.07.2012
(51) Int. Cl.: B60K 1/04, B60K 1/00, B60K 15/063, B62D 21/11

(54) **ELEKTRISCH ANGETRIEBENE ACHSE EINES ZWEISPURIGEN FAHRZEUGS**
ELECTRICALLY DRIVEN AXLE OF A DUAL TRACK VEHICLE
ESSIEU ENTRAÎNÉ ÉLECTRIQUEMENT D'UN VÉHICULE À DEUX VOIES

(30) Priorität: 30.08.2011 DE 102011081836
(43) Veröffentlichungstag der Anmeldung: 09.07.2014
(73) Patentinhaber: Bayerische Motoren Werke Aktiengesellschaft, 80809 München (DE)
(72) Erfinder: GLESER, Andreas, 82194 Groebenzell (DE); KÜHLEWIND, Steffen, 81827 München (DE); STENZENBERGER, Alfred, 86681 Fuenfstetten (DE)
(86) Internationale Anmeldenummer: PCT/EP2012/063972
(87) Internationale Veröffentlichungsnummer: WO 2013/029866

(56) Entgegenhaltungen:
- DE-A1-102009 015 414
- FR-A1- 2 954 232
- US-A1- 2010 025 131

## Beschreibung

Die Erfindung betrifft eine elektrisch angetriebene Achse eines zweispurigen Fahrzeugs mit den Rädern zugeordneten Antriebswellen und einem Achsträger mit mehreren daran befestigten radführenden Lenkern, wobei zumindest ein Elektromotor oder ein Achsgetriebe am Achsträger befestigt ist und weiterhin ein Elemente zur Bereitstellung elektrischer Energie für den Elektromotor oder für einen über das Achsgetriebe mit den Antriebswellen verbundenen elektrischen Antriebsmotor enthaltendes Gehäuse am Achsträger befestigt ist oder einen Bestandteil des Achsträgers in Form eines Grundkörpers bildet. Eine solche Achse ist in der nicht vorveröffentlichen deutschen Patentanmeldung 10 2010 043 901 gezeigt, und aus der US 2010/025131 A1 bekannt.

Die Bereitstellung einer ausreichenden Menge von elektrischer Energie für ein nicht spurgebundenes elektromotorisch angetriebenes Fahrzeug stellt bekanntlich hinsichtlich des benötigten Bauraums eine große Herausforderung dar, da die Energiespeicherdichte elektrischer Energiespeicher signifikant niedriger als diejenige von Tanks für Flüssigkraftstoff wie Benzin oder Diesel ist. Aus diesem Grund wurde bereits vorgeschlagen, ein relativ voluminöses Gehäuse, welches Elemente zur Bereitstellung von elektrischer Energie aufnimmt und zu denen neben Energiespeicherelementen auch eine zugehörige Leistungselektronik zur Versorgung insbesondere des elektrischen Antriebsmotors (= Elektromotors) zählen kann, geschickt in einen Achsträger zu integrieren.

In weiterer Ausgestaltung dieses Grundgedankens soll vorliegend eine hinsichtlich des Bauraumbedarfs optimierte Anordnung für eine elektrisch angetriebene Achse nach dem Oberbegriff des Anspruchs 1 aufgezeigt werden (= Aufgabe der vorliegenden Erfindung).

Die Lösung dieser Aufgabe ist dadurch gekennzeichnet, dass das Gehäuse in Seitenansicht treppenförmig gestaltet ist und aus einer Oberschale und einer Unterschale besteht, deren Trennfuge zur Fahrzeug-Rückseite hin ansteigend verläuft. Vorteilhafte Weiterbildungen sind Inhalt der Unteransprüche.

Mit der treppenförmigen Formgebung, durch welche quasi mehrere Treppenstufen gebildet sind, wird der üblichen Bauform elektrischer Energiespeicher Rechnung getragen. Diese stellen zumeist quaderförmige Baueinheiten dar, deren Abmessungen einfach so gewählt werden kann, dass sie in die im weiteren sog. Treppenstufen des besagten Gehäuses ohne nennenswerten Bauraumverlust eingesetzt werden können. Mit dem zur Fahrzeug-Rückseite hin ansteigenden Verlauf ist es einfach möglich, unterhalb der weiter hinten liegenden Treppenstufen zumindest Bestandteile der elektromotorischen Antriebseinheit, bestehend aus einem oder zwei Elektromotoren, ferner üblicherweise einem Getriebe und im Falle nur eines Elektromotors ein Differential aufweisend, geschickt unterzubringen, wobei selbstverständlich auch die von dieser elektromotorischen Antriebseinheit abgehende(n) Rad-Antriebswellen in diesem Bereich unterhalb der hinteren Treppenstufe(n) liegen. Dabei ist es aber auch möglich, in direkter Umgebung der Achse und somit unter den hinteren "Treppenstufen" lediglich ein Achsgetriebe vorzusehen, über das der an anderer geeigneter Stelle angeordnete und über eine Welle mit dem Achsgetriebe verbundene elektrische Antriebsmotor die Rad-Antriebswellen antreibt.

Mit der weiterhin vorgeschlagenen Gehäuse-Ausbildung in Form einer Oberschale und einer Unterschale ist eine steife Gestaltung nicht nur des Gehäuses selbst, sondern auch des anteilig durch diesen gebildeten Achsträgers realisierbar und die sinnvoll verlaufende Trennfuge erlaubt den Zugang zu den innerhalb des Gehäuses angeordneten Elementen.

Vorzugsweise sind an einer erfindungsgemäßen Achse zumindest ein vorderer und ein hinterer sich über die Fzg.-Mittenebene über einen größeren Teil der Fzg.-Breite erstreckender Querträger vorgesehen, in deren beiden Endbereichen Lager zur Anbindung der Achse am Fahrzeug-Aufbau vorgesehen sind. Damit ist eine hohe Verwindungssteifigkeit erzielbar. In Fahrzeug-Längsrichtung betrachtet kann das die Elemente zur Bereitstellung von elektrischer Energie aufnehmende Gehäuse selbst quasi einen Längsträger des Achsträgers bilden, durch den dessen soeben genannte Querträger starr miteinander verbunden sind; darüber hinaus können an den im wesentlichen in Fahrzeug-Längsrichtung ausgerichteten Seiten des Gehäuses Formteile angebracht sein, die sich zumindest über einen Teil der Gehäuse-Länge erstrecken und die an zumindest einem der beiden Querträger befestigt sind. Hierdurch kann die Steifigkeit des Achsträgers weiter erhöht werden; ferner können an diesen seitlichen Formteilen weitere Elemente der Achse befestigt sein, so beispielsweise radführende Lenker. Letztere können über sog. Lagerlaschen oder dergleichen aber auch am besagten Gehäuse direkt und/oder an einem der genannten Querträger befestigt sein.

Bereits genannt wurden vorzugsweise in den Endbereichen der genannten Querträger vorgesehene Lager (auch Achsträger-Lager genannt) zur Anbindung einer erfindungsgemäßen Achse am Fahrzeug-Aufbau. Hierfür sind vorzugsweise elastische (Gummi)-Lager vorgesehen, die zusätzlich hydraulisch bedämpft sein können. Dabei hat sich gezeigt, dass mittels in Fahrzeug-Längsrichtung hydraulisch bedämpfter Lager zwischen einer erfindungsgemäßen Achse bzw. einem entsprechenden sog. Achs-Modul und dem Fahrzeug-Aufbau auftretende Eigenresonanzen der gesamten Einheit wirkungsvoll reduziert werden können.

Vorzugsweise ist der Antriebs-Elektromotor des Fahrzeugs oder zumindest Bestandteile der elektrischen Antriebseinheit, die weiterhin ein dem Elektromotor nachgeschaltetes Getriebe und ein Differential, gegebenenfalls in einem an heutigen Kraftfahrzeugen üblichen Achsgetriebe vereint, aufweisen kann, ebenfalls über elastische Lager am erfindungsgemäßen Achsträger befestigt. Vorzugsweise sind hierfür drei Lagerstellen vorgesehen, von denen zwei auf einer Seite der Antriebseinheit (in Form eines Elektromotors mit angekoppeltem Getriebe oder falls der Elektromotor an anderer Stelle angeordnet ist, in Form eines Achsgetriebes) die einer der Fahrzeug-Längsseiten zugewandt ist, möglichst weit voneinander beabstandet sind, so dass diese beiden Lager das Motor-Antriebsmoment bestmöglich abstützen können. Das dritte Lager ist vorzugsweise auf der anderen Seite der Antriebseinheit oder des Achsgetriebes möglichst mittig bzw. nahe des Masseschwerpunkts der Antriebseinheit angeordnet und insbesondere für die Aufnahme der Gewichtskräfte ausgelegt, wobei dann, wenn dieses dritte Lager hydraulisch bedämpft ist, die Eigenschwingungen der (elektrischen) Antriebseinheit gegenüber der Achse wirkungsvoll begrenzt werden können.

Durch die nach hinten ansteigende und folglich in Fzg.-Fahrtrichtung weiter vorne tief, d.h. mit relativ geringer Höhe über der Fahrbahn liegende Gestaltung des besagten Gehäuses ist es an einem Fahrzeug mit einer erfindungsgemäßen Achse relativ einfach möglich, in diesem vorderen Gehäuse-Bereich und somit im Falle eines Heckaufpralls besonders geschützt einen Kraftstofftank für Flüssigkraftstoffe anzuordnen, aus welchem ein alternativer verbrennungsmotorischer Fahrzeug-Antrieb, der beispielsweise auf die andere Achse des Fahrzeugs wirken kann, versorgt werden kann. Hinsichtlich des Bauraumbedarfs optimiert kann ein solcher Kraftstofftank die in Fahrtrichtung vorderste durch das Gehäuse gebildete Treppenstufe bereichsweise umgreifen.

Die beigefügten Figuren zeigen ein Ausführungsbeispiel einer erfindungsgemäßen Fahrzeug-Hinter-Achse, und zwar zeigt **Figur 1** eine perspektivische Ansicht von schräg oben, **Figur 2** eine weitere perspektivische Ansicht von unten, **Figur 3** einen Längsschnitt im Bereich der Fahrzeug-Mitte, **Figur 4** die Ansicht von der Seite, **Figur 5** die Ansicht von unten und **Figur** 6 die Ansicht von oben, wobei jeweils die Fahrtrichtung des Fahrzeugs durch einen Pfeil F dargestellt ist.

Die gezeigte Hinterachse eines zweispurigen Fahrzeugs ist mittels eines Elektromotors 1 angetrieben bzw. es sind die beiden Räder der Achse, die in den Figuren durch die jeweilige Bremsscheibe (an der linken Fzg.-Seite befindet sich die Bremsscheibe 21 und an der rechten Fzg.-Seite befindet sich die Bremsscheibe 22) dargestellt sind, mittels dieses Elektromotors 1 über zugehörige Antriebswellen 23 bzw. 24 antreibbar. Diese Antriebswellen 23, 24 gehen von einem Getriebe 2 mit integriertem Differential ab, welches funktional und räumlich an das Abtriebsritzel 1 a des hier im Bereich der Hinterachse angeordneten Elektromotors 1 angeschlossen ist. Eine hiervon abweichende Anordnung des elektrischen Antriebsmotors ist jedoch möglich.

Die beiden Fzg.-Räder, genauer deren Radträger 25, auf denen wie üblich auch die jeweilige Bremsscheibe 21 bzw. 22 um ihre Rotationsachse drehbar gelagert ist, sind jeweils durch insgesamt fünf radführende Lenker 3, 4, 5, 6, 7 geführt, die mit ihrem dem Radträger 25 abgewandten Enden an einem in seiner Gesamtheit mit der Bezugsziffer 10 gekennzeichneten Achsträger angelenkt sind. Ein wesentliches Bestandteil dieses im weiteren noch detailliert beschriebenen Achsträgers 10 ist ein Gehäuse 11, in welchem figürlich nicht dargestellte Elemente zur Bereitstellung elektrischer Energie für den Elektromotor 1 untergebracht sind. Ein weiteres wesentliches Bestandteil dieses Achsträgers 10 sind vier Achsträger-Lager 12a - 12d, die an beiden Fzg.-Seiten in Fahrtrichtung F betrachtet jeweils vor und hinter dem dortigen Radträger 25 und in Fzg.-Querrichtung betrachtet relativ weit außen, d.h. von der Fzg.-Mittenebene beabstandet, jedoch um ein gewisses Maß innerhalb der Radträger 25, vorgesehen sind. Dabei sind diese Achsträger-Lager 12a, 12b, 12c, 12d, über welche der Achsträger 10 am Fzg.-Aufbau gelagert bzw. die Struktur des Fzg.-Aufbaus anteilig auf dem Achsträger 10 abgestützt ist, an den Enden von Querträgern 13, 14 (vorderer Querträger 13, hinterer Querträger 14) vorgesehen, die Bestandteil des Achsträgers 10 sind und sich über einen weiten Bereich der Achse in Fzg.-Querrichtung erstrecken.

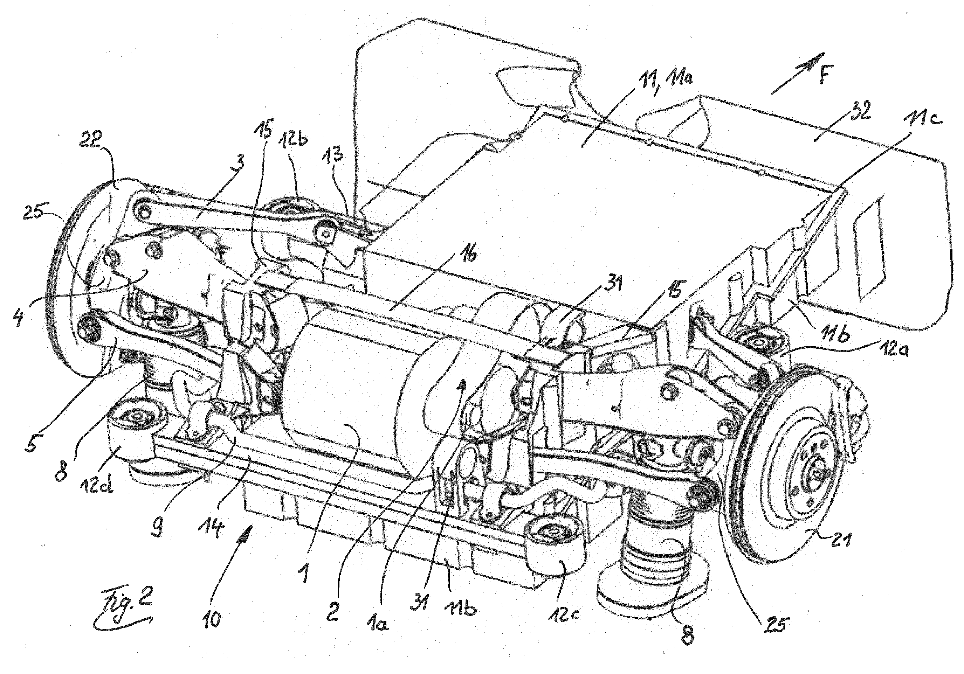

An einem der fünf radführenden Lenker, nämlich auf einem unteren Querlenker 4, hinter welchem ein Spurlenker 5 und vor welchem ein weiterer Lenker 3 in einer unteren Lenker-Ebene, und oberhalb derer zwei weitere Lenker 6, 7 in einer oberen Lenkerebene angeordnet sind, ist eine FederDämpfer-Einheit 8 mit ihrem unteren Ende abgestützt, auf deren gegenüberliegenden oberem Ende der Fzg.-Aufbau anteilig abgestützt ist. Als weiteres, für die vorliegende Erfindung jedoch nicht wesentliches Federelement ist in den **Figuren 2****,** **4** **und** **5** noch ein üblicher Querstabilisator 9 zwischen der linksseitigen und der rechtsseitigen Radaufhängung vorgesehen.

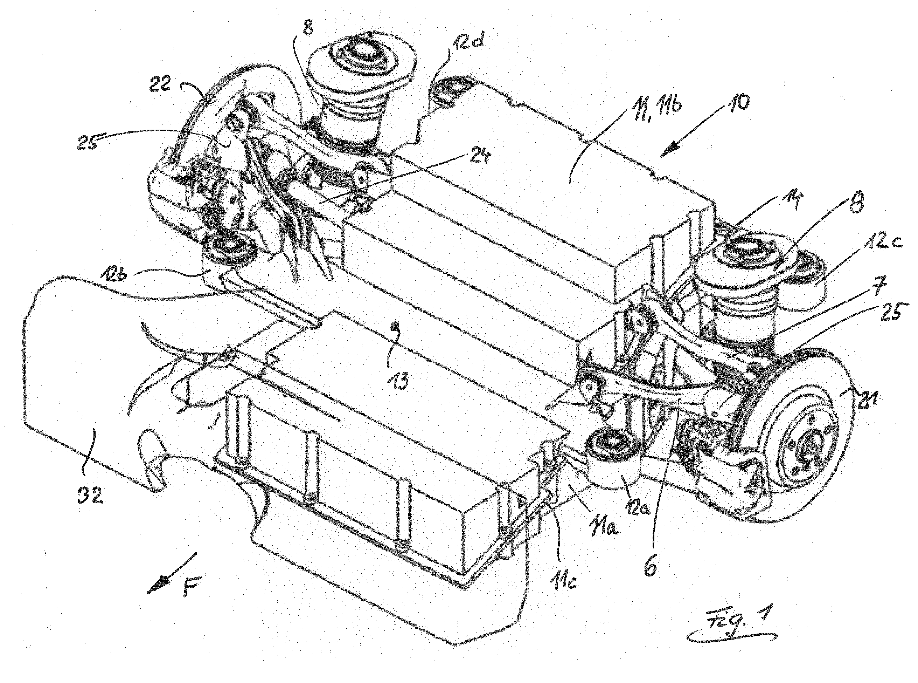

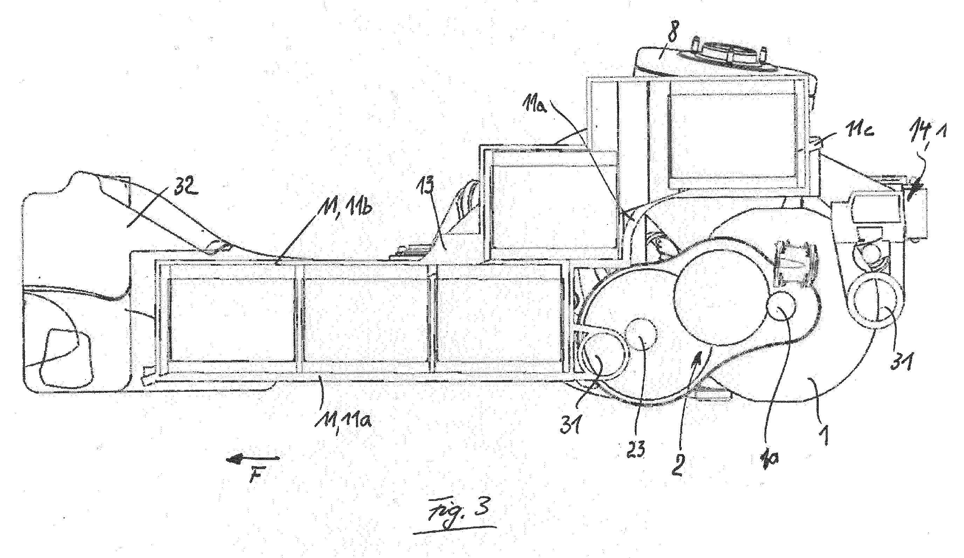

Der Achsträger 10 ist wie bereits erwähnt wurde unter anderem durch das Gehäuse 11 gebildet, in welchem Energiespeicherelemente sowie weitere Elemente zur Versorgung des Elektromotors 1 mit elektrischer Energie, so auch eine sog. Leistungselektronik, untergebracht sind. Wie insbesondere aus den **Figuren 1 - 3** hervorgeht ist das Gehäuse 11 treppenförmig gestaltet und besitzt quasi die Form von teils stufenartig aneinander gereihten Quadern (dieser Begriff des "Quaders" ist dabei ausdrücklich nicht im streng geometrischen Sinne zu verstehen, sondern soll nur näherungsweise die Form beschreiben), wodurch quasi Treppenstufen vorliegen und eine nach hinten zur Fahrzeug-Rückseite hin (und somit gegen Fahrtrichtung F) ansteigende Treppe gebildet ist. Gegenüber der oder den in Fahrtrichtung F vorderen Treppenstufe(n) liegt somit unterhalb der hinteren Treppenstufe(n) ein freier Raum unterhalb des Gehäuses 11 vor. In diesem freien Raum und somit unterhalb der hinteren Treppenstufe(n) des Gehäuses 11 sind unter anderem der Elektromotor 1 und das Getriebe 2 angeordnet. Getragen wird diese Bau-Einheit von Elektromotor 1 und Getriebe 2 dabei von insgesamt drei Antriebseinheit-Lagern 31, von denen in den **Figuren 2****,** **3** nur zwei Stück sichtbar sind und eines an der Unterseite des hinteren Querträgers 14 und ein weiteres an der vertikalen Rückwand des hintersten Quaders der unteren Quaderreihe des eine Einheit darstellenden Gehäuses 11 befestigt ist.

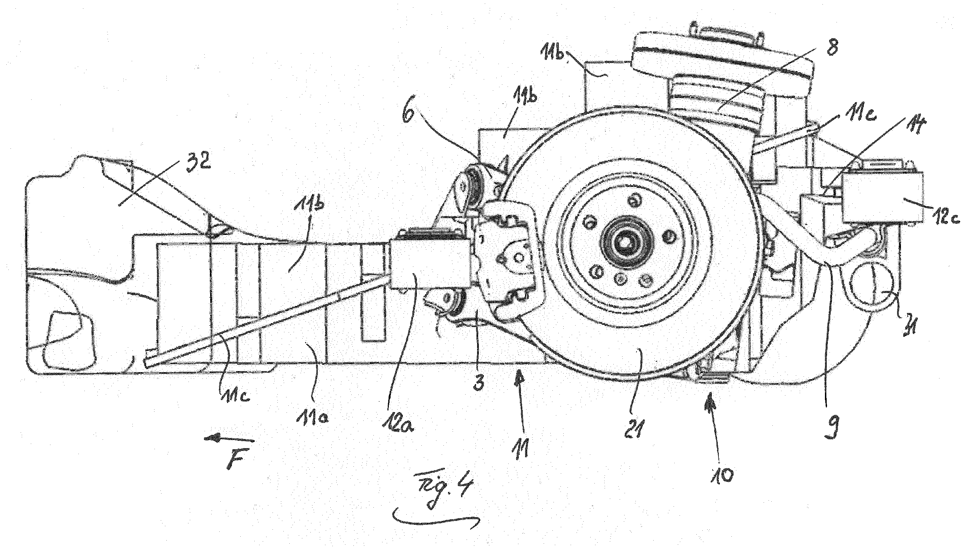

Wie soeben erwähnt ist das Gehäuse 11 eine Einheit, d.h. ausdrücklich kein Konglomerat von einzelnen Quadern, wenngleich der Begriff der aneinander gereihten Quader zur Beschreibung der Form des Gehäuses 11 verwendet wird. Das Gehäuse 11 kann bspw. in Aluminium-Druckguss ausgeführt sein und ist teilbar bzw. kann geöffnet werden, um die im Gehäuse 11 angeordneten Elemente verbauen und warten zu können. In diesem Sinne besteht das Gehäuse 11 aus einer wannenförmigen Unterschale 11a und einer aufgestülpten ebenso wannenförmigen Oberschale 11 b, die in einer als "Wannenrand" umlaufenden Trennfuge 11 c zusammengesetzt sind. Wie aus den **Figuren 1** **und** **4** hervorgeht hat diese Trennfuge 11 c einen von vorne nach hinten ansteigenden Verlauf, wobei vorliegend dieser Verlauf sogar linear stetig ist, dies jedoch keineswegs sein muss.

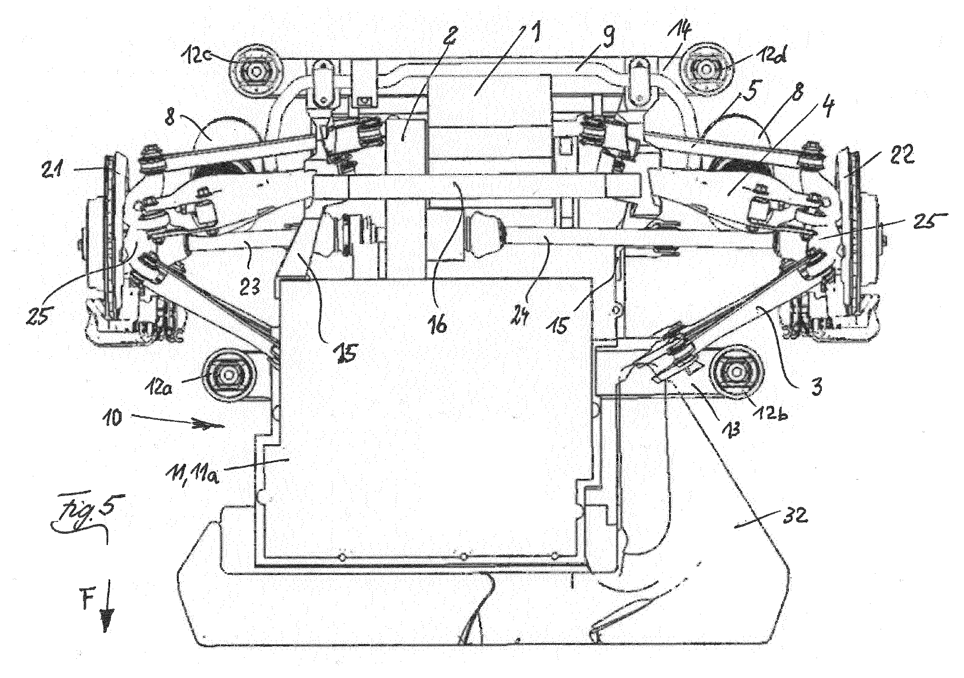

An die beiden Seitenflächen des Gehäuses 11, d.h. an der linken und an der rechten Seite des Fahrzeugs sind im hinteren Bereich des Gehäuses bereichsweise und in den **Figuren 2** **und** **5** sichtbare Guß-Formteile 15 angeflanscht, die sich im Bereich der Antriebseinheit (Elektromotor 1 und Getriebe 2) weiter nach unten, d.h. zur Fahrbahn hin erstrecken als das Gehäuse 11 selbst. Diese verleihen der gesamten Anordnung eine höhere Steifigkeit, insbesondere indem das linksseitige und das rechtsseitige Formteil 15 über eine Querstrebe 16 aneinander abgestützt sind. Jedes Formteil 15 ist ferner am hinteren Querträger 14 befestigt. Selbstverständlich ist auch eine geeignete gegenseitige Befestigung zwischen dem Gehäuse 11 und jedem der Querträger 13, 14 vorgesehen, um einen in sich biege- und verwindungssteifen Achsträger 10, bestehend aus den genannten Bauelementen 11 - 16 zu erhalten. Dabei sei der Vollständigkeit halber erwähnt, dass der hintere Querträger 14 in Vertikalrichtung betrachtet weiter von der Fahrbahn beabstandet ist als der vordere Querträger 13.

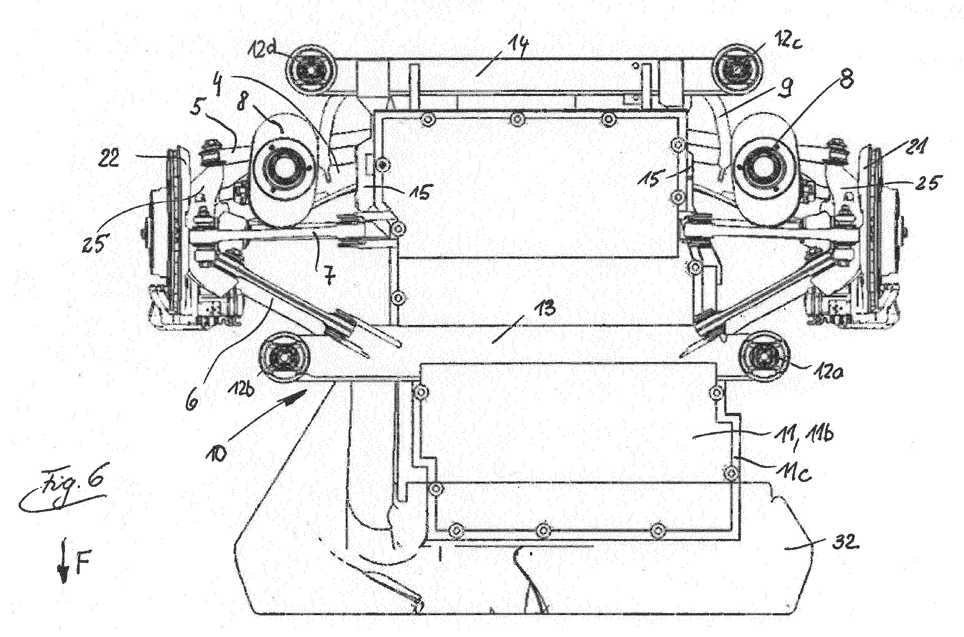

Nochmals auf die Anlenkung der radführenden Lenker 3 - 7 zurückkommend ist der vordere untere Lenker 3 an der linken Fzg.-Seite am Gehäuse 11 und an der rechten Fahrzeug-Seite am vorderen Querträger 13 über dort angebrachte Lager-Laschen angelenkt, während der untere mittlere Lenker 4 am jeweiligen Formteil 15 und der Spurlenker 5 am hierfür geeignet gestalteten hinteren Querträger 14 über Lager-Laschen angelenkt ist. Die oberen vorderen Lenker 6 sind am vorderen Querträger 13 und die oberen hinteren Lenker 7 am Gehäuse 11 in gleicher Weise über Lager-Laschen (= Lagerbock) angelenkt (vgl. insbesondere **Fig. 1****,** **6**).

Wenn das Fahrzeug neben dieser Achse mit elektromotorischen Antrieb mit einem weiteren Antriebsaggregat in Form eines Verbrennungsmotors, welcher dann beispielsweise die Vorderachse antreiben kann, ausgerüstet ist, so kann in Fahrtrichtung F vor dieser hier dargestellten und beschriebenen Achse ein Kraftstofftank zur Versorgung dieses Verbrennungsmotors am Fahrzeug angeordnet sein. Dabei kann dieser hier nur bruchstückhaft dargestellte und mit der Bezugsziffer 32 gekennzeichnete Kraftstofftank die in Fahrtrichtung F vorderste durch das Gehäuse 11 gebildete Treppenstufe bereichsweise umgreifen.

## Patentansprüche

1. Elektrisch angetriebene Achse eines zweispurigen Fahrzeugs mit den Rädern (21, 22) zugeordneten Antriebswellen (23, 24) und einem Achsträger (10) mit mehreren daran befestigten radführenden Lenkern (3 - 7), wobei zumindest ein Elektromotor (1) oder ein Achsgetriebe am Achsträger (10) befestigt ist und weiterhin ein Elemente zur Bereitstellung elektrischer Energie für den Elektromotor (1) oder für einen über das Achsgetriebe mit den Antriebswellen verbundenen elektrischen Antriebsmotor enthaltendes Gehäuse (11) am Achsträger (10) befestigt ist oder einen Bestandteil des Achsträgers (10) in Form eines Grundkörpers bildet,
**dadurch gekennzeichnet, dass** das Gehäuse (11) in Seitenansicht treppenförmig gestaltet ist und aus einer Oberschale (11 b) und einer Unterschale (11a) besteht, deren Trennfuge (11c) zur Fahrzeug-Rückseite hin ansteigend verläuft.

2. Fahrzeug-Achse nach Anspruch 1, **dadurch gekennzeichnet, dass** ein vorderer und ein hinterer durchgehender Querträger (13, 14) vorgesehen sind, in deren beiden Endbereichen Lager (12a - 12d) zur Anbindung der Achse am Fahrzeug-Aufbau vorgesehen sind.

3. Fahrzeug-Achse nach Anspruch 1 oder 2, **dadurch gekennzeichnet, dass** an den im wesentlichen in Fahrzeuglängsrichtung ausgerichteten Seiten des Gehäuses (11) Formteile (15) angebracht sind, die sich zumindest über einen Teil der Gehäuse-Länge erstrecken und an zumindest einem der beiden Querträger (14) befestigt sind.

4. Fahrzeug-Achse nach einem der vorangegangenen Ansprüche, **dadurch gekennzeichnet, dass** der Elektromotor (1) zusammen mit einem nachgeschalteten Getriebe (2) unter Zwischenschaltung elastischer Lager (31) im Bereich der Unterseite der hinteren durch das Gehäuse (11) gebildeten Treppenstufen befestigt ist.

5. Fahrzeug-Achse nach einem der vorangegangenen Ansprüche, **dadurch gekennzeichnet, dass** radführende Lenker (3, 4, 5, 6, 7) über Lagerlaschen am Gehäuse (11) und/oder an einem der Querträger (13, 14) und/oder an einem der seitlichen Formteile (15) befestigt sind.

6. Fahrzeug-Achse nach einem der vorangegangenen Ansprüche, **dadurch gekennzeichnet, dass** ein im Fahrzeug verbauter Kraftstofftank (32) die in Fahrtrichtung vorderste durch das Gehäuse (11) gebildete Treppenstufe bereichsweise umgreift.

## Claims

1. An electrically driven axle of a two-track vehicle with drive shafts (23, 24) associated with the wheels (21, 22) and an axle support (10) having a plurality of wheel-guiding control arms (3 to 7) fastened thereto, wherein at least one electric motor (1) or an axle drive is fastened to the axle support (10) and a housing (11) containing elements for providing electric energy for the electric motor (1) or for an electric drive motor connected by the axle drive to the drive shafts is furthermore fastened to the axle support (10) or forms a component of the axle support (10) in the form of a base body, **characterised in that** the housing (11) is step-shaped in a side view and comprises an upper shell (11b) and a lower shell (11 a), the joint (11c) of which runs upwardly toward the vehicle rear.

2. A vehicle axle according to claim 1, **characterised in that** a front and a rear continuous crossmember (13, 14) are provided, in the two end regions of which bearings (12a to 12d) are provided to attach the axle to the vehicle body.

3. A vehicle axle according to claim 1 or 2, **characterised in that** moulded parts (15) are attached to the sides of the housing (11) oriented substantially in the longitudinal direction of the vehicle, said moulded parts extending at least over a part of the housing length and being fastened to at least one of the two crossmembers (14).

4. A vehicle axle according to any one of the preceding claims, **characterised in that** the electric motor (1), together with a downstream gearing (2), is fastened with the interposition of resilient bearings (31) in the region of the lower side of the rear steps formed by the housing (11).

5. A vehicle axle according to any one of the preceding claims, **characterised in that** wheel-guiding control arms (3, 4, 5, 6, 7) are fastened by bearing brackets to the housing (11) and/or to one of the crossmembers (13, 14) and/or to one of the lateral moulded parts (15).

6. A vehicle axle according to any one of the preceding claims, **characterised in that** a fuel tank (32) installed in the vehicle encompasses, in regions, the step, which is foremost in the direction of travel and formed by the housing (11).

## Revendications

1. Essieu à entraînement électrique d'un véhicule à deux voies, comprenant des arbres moteurs (23, 24) associés aux roues (21, 22) et un support d'essieu (10) auquel sont fixés plusieurs bras (3-7),
au moins un moteur électrique (1) ou une transmission d'essieu étant fixée au support d'essieu (10) et en outre un boîtier (11) comportant des éléments pour fournir de l'énergie électrique au moteur électrique (1) ou pour un moteur d'entraînement électrique relié par la transmission d'essieu aux arbres d'entraînement étant fixé au support d'essieu (10) ou constituant un composant du support d'essieux (10) sous la forme d'un corps de base,
essieu de véhicule **caractérisé en ce que**
le boîtier (11) présente en vue de côté une forme d'escalier et se compose d'une coque supérieure (11b) et d'une coque inférieure (11a) dont la jonction (11c) remonte à partir du côté arrière du véhicule.

2. Essieu de véhicule selon la revendication 1,
**caractérisé par**
une traverse avant et une traverse arrière (13, 14), distinctes, et dont les deux zones d'extrémité comportent des paliers (12a-12d) pour fixer l'essieu à la carrosserie du véhicule.

3. Essieu de véhicule selon la revendication 1 ou 2,
**caractérisé en ce que**
sur les côtés du boîtier (11) essentiellement orientés dans la direction longitudinale du véhicule, du côté du boîtier (11) il y a des pièces de forme (15) qui s'étendent au moins sur une partie de la longueur du boîtier et sont fixés au moins l'une des traverses (14).

4. Essieu de véhicule selon l'une des revendications précédentes,
**caractérisé en ce que**
le moteur électrique (1) avec la transmission (2) en aval est fixé avec interposition de paliers élastiques (31) dans la zone du côté inférieur des marches d'escalier formées par le boîtier (11).

5. Essieu de véhicule selon l'une des revendications précédentes,
**caractérisé en ce que**
les bras de guidage de roues (3, 4, 5, 6, 7) sont fixés par des paliers à pattes au boîtier (11) et/ou à l'une des traverses (13, 14) et/ou sur l'une des pièces de forme (15).

6. Essieu de véhicule selon l'une quelconque des revendications précédentes,
**caractérisé en ce que**
un réservoir de carburant (32) intégré dans le véhicule entoure partiellement la marche la plus à l'avant selon la direction de circulation, marche formée par le boîtier (11).
